(19) Europäisches Patentamt
European Patent Office
Office européen des brevets

(11) Veröffentlichungsnummer: **0 046 164**
**B1**

(12) # EUROPÄISCHE PATENTSCHRIFT

(45) Veröffentlichungstag der Patentschrift: **30.11.83**

(21) Anmeldenummer: **81103228.3**

(22) Anmeldetag: **29.04.81**

(51) Int. Cl.³: **C 09 K 11/06,** C 09 B 5/62, C 07 D 471/06, H 01 L 31/04, G 02 F 1/13, G 09 F 9/35, F 21 V 9/16, H 01 S 3/20

(54) **Verwendung von Perylenderivaten für Fluoreszenzzwecke und neue Perylenderivate.**

(30) Priorität: **30.04.80 DE 3016765**

(43) Veröffentlichungstag der Anmeldung: **24.02.82 Patentblatt 82/8**

(45) Bekanntmachung des Hinweises auf die Patenterteilung: **30.11.83 Patentblatt 83/48**

(84) Benannte Vertragsstaaten: **AT BE CH DE FR GB IT LI NL SE**

(56) Entgegenhaltungen: **keine**

(73) Patentinhaber: **Fraunhofer-Gesellschaft zur Förderung der angewandten Forschung e.V., Leonrodstrasse 54, D-8000 München 19 (DE)**

(72) Erfinder: **Langhals, Heinz, Dr., Sundgauallee 55, D-7800 Freiburg i. Br. (DE)**

(74) Vertreter: **Kraus, Walter, Dr. et al, Patentanwälte Dres. Kraus & Weisert Irmgardstrasse 15, D-8000 München 71 (DE)**

EP 0 046 164 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verwendung von Perylenderivaten für Fluoreszenzzwecke und neue Perylenderivate

Die Erfindung betrifft die Verwendung von Perylenderivaten für Fluoreszenzzwecke, insbesondere in Lichtsammelsystemen, und neue Perylenderivate.

Die allgemeine Ölverknappung bringt es mit sich, daß man nach Systemen sucht, mit denen neue Energiequellen erschlossen und auf wirtschaftliche Weise ausgenutzt werden können. Es besteht ein großer Bedarf an Lichtsammelsystemen, die in Verbindung mit Solarzellen zur Nutzbarmachung der Sonnenenergie verwendet werden können. Die wirtschaftliche Verwendung eines Lichtsammelsystems wird in starkem Maße von dem Farbstoff bestimmt, der in dem Lichtsammelsystem als optisch aktive Komponente eingesetzt wird. An die Qualität eines solchen Farbstoffs werden strenge Anforderungen gestellt, und insbesondere muß das Verhältnis von Emissions- zu Absorptionsflächen einen bestimmten Wert aufweisen. Bei Lichtsammelsystemen ist nur der Anteil des emittierten Lichtes, dessen Emissionsbande weitgehend frei von Absorption ist, geeignet.

Der vorliegenden Erfindung liegt die Aufgabe zugrunde, Perylenderivate für die Verwendung in Lichtsammelsystemen zur Verfügung zu stellen. Darüberhinaus sollen Perylenderivate zur Verfügung gestellt werden, die für allgemeine Anzeigeeinrichtungen, Hinweis- und Markierungszwecke, zum Beispiel auch für passive Anzeigeelemente, geeignet sind.

Erfindungsgemäß sollen weiterhin neue Perylenderivate zur Verfügung gestellt werden, die für die angegebenen Zwecke verwendet werden können.

Die vorliegende Erfindung betrifft somit die Verwendung von Perylenderivaten der folgenden allgemeinen Formel I

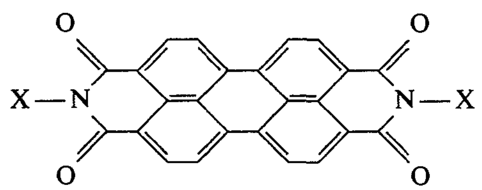

(I)

worin X einen Substituenten der allgemeinen Formel II

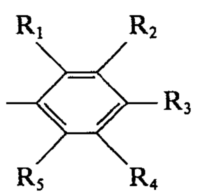

(II)

wobei in der obigen Formel II $R_1$, $R_2$, $R_3$, $R_4$ und $R_5$ gleich oder unterschiedlich sein können und Wasserstoff oder eine geradkettige oder verzweigte Alkylgruppe mit 1 bis 6 Kohlenstoffatomen, eine Trifluormethylgruppe, eine Nitrogruppe, eine Hydroxygruppe, eine Carboxylgruppe, eine Alkoxygruppe mit 1 bis 4 Kohlenstoffatomen, eine Dimethylsulfonamidogruppe oder ein Halogenatom bedeuten und wobei mindestens zwei der Substituenten $R_1$, $R_2$, $R_3$, $R_4$ und $R_5$ ein Wasserstoffatom bedeuten, mit Ausnahme der Verbindungen, worin

1) $R_1$, $R_3$ und $R_5$ Methyl und $R_2$ und $R_4$ Wasserstoff bedeuten oder
2) $R_1$ Trifluormethyl, $R_3$ Methoxy, $R_2$, $R_4$ und $R_5$ Wasserstoff bedeuten; oder

worin X eine Cycloalkylgruppe mit 4 bis 14 Kohlenstoffatomen oder eine Gruppe der allgemeinen Formel III

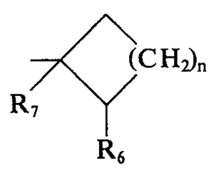

(III)

worin $R_6$ für Wasserstoff oder Hydroxyl, $R_7$ für Wasserstoff oder Methyl und n für 0 oder 9 stehen; oder
worin X
einen Rest der folgenden Formeln IV, V, VI, VII, VIII oder IX

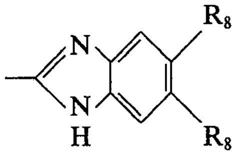

(IV)

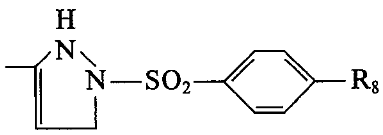

(V)

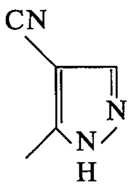

(VI)

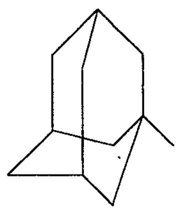

(VII)

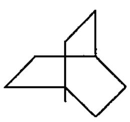

(VIII)

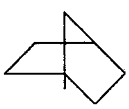

(IX)

worin $R_8$ für Wasserstoff oder $C_1-C_4$-Alkyl steht, oder
worin X einen 1-, 2- oder 9-Anthracylrest oder einen 9-Acridylrest bedeutet,
als Fluoreszenzfarbstoffe für die Energie-Umwandlung oder Energiekonzentration mit Fluoreszenzkollektoren oder verwandten Systemen.

Die Erfindung betrifft weiterhin Perylderivate der folgenden allgemeinen Formel I'

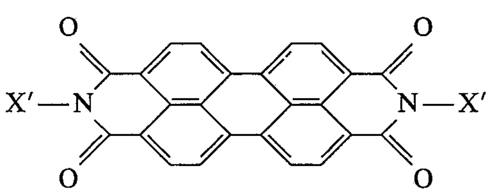

(I')

worin X' einen Substituenten der allgemeinen Formel II'

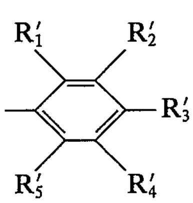

(II')

wobei in der obigen Formel II' $R'_1$, $R'_2$, $R'_3$, $R'_4$ und $R'_5$ gleich oder unterschiedlich sein können und Wasserstoff oder eine geradkettige oder verzweigte Alkylgruppe mit 1 bis 6 Kohlenstoffatomen, eine tert.-Alkylgruppe mit 4 bis 20 Kohlenstoffatomen, eine Trifluormethylgruppe, eine Nitrogruppe, eine Hydroxygruppe, eine Carboxylgruppe, eine Alkoxygruppe mit 1 bis 4 Kohlenstoffatomen, eine Dimethylsulfonamidgruppe oder ein Halogenatom bedeuten und wobei

a) mindestens zwei der Substituenten $R'_1$, $R'_2$, $R'_3$, $R'_4$ und $R'_5$ ein Wasserstoffatom bedeuten und

b) mindestens einer und maximal drei der Substituenten $R'_1$, $R'_2$, $R'_3$, $R'_4$ oder $R'_5$ eine tert.-Alkylgruppe mit 4 bis 20 Kohlenstoffatomen bedeuten,

worin X' einen Rest der folgenden Formeln IV, V, VI, VII,VIII oder IX

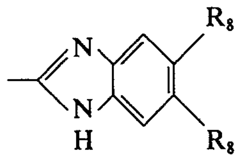

(IV)

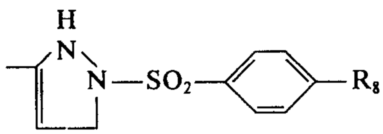

(V)

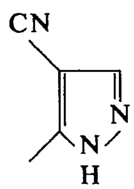

(VI)

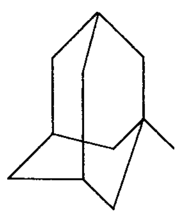

(VII)

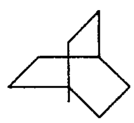

(VIII)

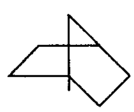

(IX)

worin $R_8$ für Wasserstoff oder $C_1-C_4$-Alkyl steht, einen 1-, 2- oder 9-Anthracylrest oder einen 9-Acridylrest bedeutet.

Die Anmelderin hat überraschenderweise gefunden, daß die Verbindungen der Formel I in Lichtsammelsystemen (fluorescent collectors) in Solarzellen zur Umwandlung der Sonnenenergie in andere Energiearten dienen können.

Die Anmelderin hat gefunden, daß die Perylenderivate der allgemeinen Formel I in Solarzellen zur Nutzbarmachung der Sonnenenergie und in Szintillatoren bekannter Art (vgl. beispielsweise J. B. Birks »The Theory and Practice of Scintillation Counting«, Pergamon Presss, London 1964; J. Opt. Am. 39, 912, 1949; J. Appl. Phys. 40, 3544, 1969; »Nuclear Instruments a. Methods« 87, 111–123, 1970) Verwendung finden können. Darüberhinaus eignen sich die genannten Perylenderivate für vielerlei Anzeige-, Hinweis- und Markierungszwecke, zum Beispiel für passive Anzeigeelemente, Hinweis- und Verkehrszeichen, wie Ampeln.

Die Perylenderivate der Formel I zeichnen sich dadurch aus, daß das Verhältnis der Absorptionsbandbreite zur Emissionsbandbreite sehr groß ist. Durch die gute Trennung von Absorptions- und Fluoreszenzemissionsbanden weisen diese Farbstoffe nur eine geringe Selbstabsorption auf und zeigen dadurch eine hohe Fluoreszenzintensität. Vorteilhaft können auch Mischungen solcher Farbstoffe mit unterschiedlichen Absorptionsgebieten, aber annähernd gleichen Emissionsbanden eingesetzt werden. Darüberhinaus zeigen diese Farbstoffe vorzügliche Echtheitseigenschaften, insbesondere eine hohe Lichtechtheit.

Die Farbstoffe der Formel I werden vorzugsweise in einer Konzentration von 0,005 bis 0,5%, besonders bevorzugte in einer Konzentration von 0,01 bis 0,05%, bezogen auf das Gewicht des Trägers, eingesetzt.

Die Farbstoffe werden in einer Flüssigkeit oder in einem Festkörper gelöst, wobei, je nach Einsatzgebiet, verschiedene geometrische Formen in Frage kommen. Geeignete feste Medien, wie sie

zum Beispiel zum Sammeln von Licht in Verbindung mit Solarzellen und in passiven Anzeigeelementen eingesetzt werden, sind zum Beispiel lichtdurchlässige optisch verwendbare Kunststoffe, wie Homo- und Copolymerisate der Acrylsäure und ihren Derivaten oder der Methacrylsäure und ihren Derivaten oder Polycarbonate. Des weiteren können die Lichtsammelsysteme den Farbstoff auch in einer Flüssigkeit — zum Beispiel in einem Alkohol, Keton, Halogenkohlenwasserstoff, Äther — gelöst enthalten. Bevorzugte Lösungsmittel sind beispielsweise Äthanol, Propanol, Methyläthylketon, Aceton, Cyclohexanon, Chloroform, Perchloräthylen, Glykolmonomethyläther etc.

Die erfindungsgemäße Verwendung der Farbstoffe der Formel I ist von großem Vorteil, da man eine gute Quantenausbeute und einen hohen Verstärkungsfaktor erhält.

Bei der erfindungsgemäßen Verwendung von Verbindungen der allgemeinen Formel II können $R_1$, $R_2$, $R_3$, $R_4$ und $R_5$ geradkettige oder verzweigte Alkylgruppen mit 1 bis 6 Kohlenstoffatomen, wie eine Methyl-, Äthyl-, Propyl-, n-Propyl-, Isopropyl-, n-Butyl-, sec.-Butyl-, tert.-Butyl-, n-Amyl-, tert.-Amyl-, sec.-Amyl- oder die verschiedenen isomeren Hexylgruppen bedeuten. Bevorzugt bedeuten die Substituenten $R_1$, $R_2$, $R_3$, $R_4$ oder $R_5$ eine tert.-Butylgruppe. Am meisten bevorzugt bedeuten einer, zwei oder drei der Substituenten, vorzugsweise $R_1$, $R_3$ und $R_5$, eine tert.-Butylgruppe. Es wurde überraschenderweise gefunden, daß die Substitution mit t-Butylgruppen im allgemeinen zu einer erheblichen Steigerung der Löslichkeit der Farbstoffe in organischen Medien und zu einer überraschend guten Photostabilität führt. Durch Substitution des Phenylrestes der Formel II an den Stellungen $R_1$ bzw. $R_5$ mit t-Butylgruppen werden in organischen Medien lösliche Farbstoffe mit sehr hohen Fluoreszenzquantenausbeuten erhalten. Die Fluoreszenzquantenausbeuten erreichen überraschenderweise 100%.

Die Farbstoffe der Formel I sind teilweise bekannte und teilweise neue Verbindungen. Die Farbstoffe der Formel I' sind neue Verbindungen. Die bekannten Verbindungen können nach Literaturangaben, beispielsweise nach der BE-PS 556 059, DE-OS 2 139 688, DE-OS 2 210 170, DE-OS 2 146 027, Chemical Abstracts CA., CA., 54, 25 888 e, DE-OS 1 197 185, DE-OS 2 139 690 und CA. 84, 1 662 515, hergestellt werden. Die neuen Verbindungen können nach analogen Verfahren unter Verwendung der geeigneten Amine hergestellt werden.

Bei der Verbindung der Formel I ist es wesentlich, daß die Verbindungen eine bestimmte Reinheit aufweisen.

### Allgemeines Darstellungsverfahren für Verbindungen der Formel I

1 g (2,5 mMol) Perylen-3.4.9.10-tetracarbonsäuredianhydrid wird mit 350 mg Zinkacetat, 5 ml Chinolin und 10 mMol eines primären Amins vermengt und 2 Stunden auf 200 bis 230°C unter Reinstickstoff erhitzt. Nach dem Abkühlen wird der Farbstoff abgesaugt und mit kleinen Portionen warmen Äthanols so lange gewaschen, bis der Chinolingeruch verschwunden ist. Das so erhaltene, getrocknete Rohprodukt wird durch die angegebenen Reinigungsoperationen in den gewünschten Fluoreszenzfarbstoff überführt.

### Reinigungsverfahren für Verbindungen der Formel I

1) Auskochen mit Sodalösung
Um überschüssige Perylentetracarbonsäure zu entfernen, wird das Rohprodukt mit 2%iger Sodalösung ausgekocht, wobei das Salz der Perylentetracarbonsäure in Lösung geht.
2) Filtration über Aluminiumoxid
Um Spuren von Perylentetracarbonsäure und Monoimid zu entfernen, wird das Rohprodukt in Toluol/Aceton (9 : 1) oder Dimethylformamid gelöst und über eine kurze, mit neutralem Aluminiumoxid gefüllte Säure filtriert. Der reine Farbstoff wird nach Abdestillieren des Lösungsmittels erhalten.
3) Säulenchromatographie an Kieselgel
Um isomere Farbstoffe zu trennen, wird eine Säulenchromatographie an Kieselgel als Trägermaterial und Chloroform als Elutionsmittel durchgeführt.
4) Umkristallisation
Umkristallisation der Farbstoffe aus Toluol, Chlorbenzol, o-Dichlorbenzol oder Nitrobenzol.

Die folgenden Beispiele erläutern die Erfindung.

Beispiel 1

»PERDIMEAN«

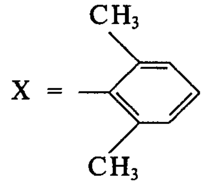

N,N'-Di-(2',6'-dimethyl-phenyl)-perylen-3.4.9.10-tetracarbonsäurediimid

Darstellung: vgl. BE-PS 556 059.
Rohausbeute: 78%; Reinheit (IR, DC): >90%.

Reinigung:
Filtration einer Lösung des Farbstoffs über neutralem $Al_2O_3$ mit Toluol/Aceton (9 : 1).

Farbe des Reinprodukts: hellrot.
Schmelzpunkt: 392° C (Zers.).
IR (KBr) ($cm^{-1}$): Imid 1702, 1665; $CH_3$ 2960, 2850.
DC ($CHCl_3$, $Al_2O_3$ neutral): $R_f$: 0,64.

Analyse: $C_{40}H_{26}N_2O_4$

| | | | |
|---|---|---|---|
| berechnet: | C: 80,25 | H: 4,38 | N: 4,68 |
| gefunden: | C: 80,33 | H: 4,43 | N: 4,74 |

Fluoreszenzquantenausbeute (absolut): $\eta = 0{,}98$ (DMF).
UV (DMF) (nm) (log$\varepsilon$): 525 (4,89), 489 (4,69), 458 (4,26).
Fluoreszenz (DMF) (nm): 576, 538.
Massenspektrum: m/e 598 ($M^+$), Intensität: 100.

Beispiel 2

»PERTRIMEAN«

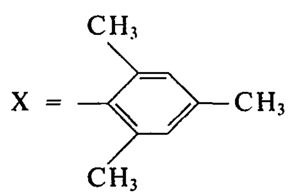

N,N'-Di-(2'.4'.6'-trimethyl-phenyl)-perylen-3.4.9.10-tetracarbonsäurediimid

Darstellung: vgl. DE-OS 2 139 688 und 2 210 170.
Rohausbeute: 67%; Reinheit (IR, DC): >90%.

Reinigung:
Filtration einer Lösung des Farbstoffs über neutralem $Al_2O_3$ mit Toluol/Aceton (9 : 1).

Farbe des Reinprodukts: dunkelrot.
Schmelzpunkt: 382° C (Zers.).
IR (KBr) ($cm^{-1}$): Imid 1700, 1665; $CH_3$ 2920, 2860.
DC ($CHCl_3$, $Al_2O_3$ neutral): $R_f$: 0,62.

Analyse: $C_{42}H_{30}N_2O_4$

| | | | |
|---|---|---|---|
| berechnet: | C: 80,49 | H: 4,83 | N: 4,47 |
| gefunden: | C: 80,31 | H: 4,88 | N: 4,46 |

Fluoreszenzquantenausbeute (absolut): $\eta = 0{,}92$ (DMF).
UV (DMF) (nm) (logε): 525 (4,85), 489 (4,64), 458 (4,21).
Fluoreszenz (DMF) (nm): 577, 539.
Massenspektrum: m/e 626 ($M^+$), Intensität: 100.

Beispiel 3

»PERDIMETAN«

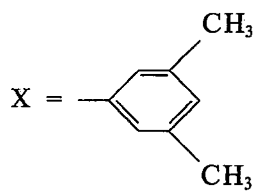

N,N'-Di-(3'.5'-dimethyl-phenyl)-perylen-3.4.9.10-tetracarbonsäurediimid

Darstellung: vgl. CA. 84, 1 662 515.
Rohausbeute: 98%; Reinheit (IR, DC): >90%.

Reinigung:
Entfernung von unumgesetzter Perylentetracarbonsäure durch Auskochen mit 2%iger Sodalösung.

Farbe des Reinprodukts: bordeauxrot.
Schmelzpunkt: >300° C.
IR(KBr) ($cm^{-1}$): Imid 1702, 1670; $CH_3$ 2920, 2860.
DC ($CHCl_3$, $Al_2O_3$ neutral): $R_f$: 0,62.
Fluoreszenzquantenausbeute (absolut): $\eta = 0{,}78$ (DMF).
UV (DMF) (nm): 518, 484, 455.
Fluoreszenz (DMF) (nm): 570, 536.

Beispiel 4

»PERDIMETER«

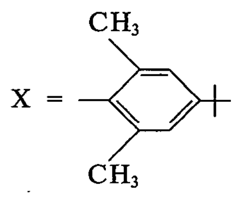

N,N'-Di-(2'.6'-dimethyl-4-tert.butyl-phenyl)-perylen-3.4.9.10-tetracarbonsäurediimid

Darstellung:
Die Darstellung erfolgt auf analoge Weise wie in den vorherigen Beispielen und den in der Beschreibung aufgeführten Literat.-Stellen.

Rohausbeute: 86%; Reinheit (IR, DC): >90%.

Reinigung:
Filtration einer Lösung des Farbstoffs über neutralem $Al_2O_3$ mit Toluol/Aceton (9 : 1).

Farbe des Reinprodukts: hellrot.
Schmelzpunkt: 442° C.
IR (KBr) ($cm^{-1}$): Imid 1700, 1660; $CH_3$ 2950, 2860.
DC ($CHCl_3$, $SiO_2$): $R_f$: 0,26.

Analyse: $C_{48}H_{42}N_2O_4$
berechnet: C: 81,10 H: 5,96 N: 3,94
gefunden: C: 80,84 H: 6,21 N: 3,90

Fluoreszenzquantenausbeute (absolut): $\eta = 0{,}97$ (DMF).
UV (DMF) (nm) (log$\varepsilon$): 526 (4,95), 490 (4,73), 459 (4,30).
Fluoreszenz (DMF) (nm): 577, 538.
Massenspektrum: m/e 710 ($M^+$), Intensität: 100.

## Beispiel 5

»PERTERBUTAN«

X =
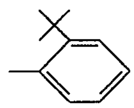

N,N'-Di-(2'-tert.-butyl)-perylen-3.4.9.10-tetra-carbonsäurediimid

Darstellung: 1 g (2,5 mMol) Perylen-3.4.9.10-tetra-carbonsäuredianhydrid wird mit 350 mg Zinkacetat, 5 ml Chinolin und 1,5 g (10 mMol) o-tert.-Butylanilin vermengt und 2 Stunden auf 220 bis 230°C unter Reinstickstoff erhitzt. Nach dem Abkühlen wird der Feststoff abgesaugt und mit kleinen Portionen warmen Äthanols so lange gewaschen, bis der Chinolingeruch verschwunden ist.
Rohausbeute: 1,1 g (73%).
Das Produkt besitzt nach IR-Spektrum und Dünnschichtchromatogramm eine Reinheit von mehr als 85%.
Zur weiteren Reinigung werden 850 mg Farbstoff-Rohprodukt in 800 ml heißem Toluol gelöst. Nach dem Erkalten werden 200 ml Aceton zugesetzt und vom ungelösten (450 mg) abfiltriert. Die Lösung wird anschließend über neutrales Aluminiumoxid filtriert (Säulendurchmesser 4,5 cm, Aluminiumoxid-Füllung 15 cm hoch), wobei unumgesetztes Dianhydrid quantitativ zurückgehalten wird. Nach dem Abdestillieren des Elutionsmittels Toluol erhält man 220 mg reinen Farbstoff in Form eines leuchtendroten Pulvers.

Farbe des Reinprodukts: hellrot.
Schmelzpunkt: 406°C (Zers.).
IR (KBr) ($cm^{-1}$): Imid 1705, 1668; $CH_3$ 2960, 2910, 2870.
DC ($CHCl_3$, $Al_2O_3$ neutral): $R_f$: 0,64.

Analyse: $C_{44}H_{34}N_2O_4$
berechnet: C: 80,71 H: 5,23 N: 4,28
gefunden: C: 79,84 H: 5,30 N: 4,06

Fluoreszenzquantenausbeute (absolut): $\eta = 0{,}94$ (DMF) $= 1{,}00$ ($CHCl_3$).
UV (DMF) (nm) (log$\varepsilon$): 524 (4,86), 488 (4,67), 458 (4,24).
Fluoreszenz (DMF) (nm): 573, 538.
Massenspektrum: m/e 654 ($M^+$), I. 9; 597 (-tert.Butyl), I. 100.

## Beispiel 6

»PARATERBUTAN«

X =
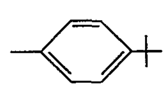

N,N'-Di-(4'-tert.-butyl-phenyl)-perylen-3.4.9.10-tetra-carbonsäurediimid

Darstellung:
Die Darstellung erfolgt auf analoge Weise wie in den vorherigen Beispielen und den in der Beschreibung aufgeführten Literaturstellen.

Rohausbeute: 98%; Reinheit (IR, DC): >95%.

Reinigung:
Filtration einer Lösung des Farbstoffs über neutralem $Al_2O_3$ mit DMF.

Farbe des Reinprodukts: dunkelweinrot.
Schmelzpunkt: >500° C.
IR (KBr) ($cm^{-1}$): Imid 1710, 1670; $CH_3$ 2960, 2900, 2860.
DC ($CHCl_3$, $Al_2O_3$ neutral): $R_f$: 0,70.

Analyse: $C_{44}H_{34}N_2O_4$

| | | | |
|---|---|---|---|
| berechnet: | C: | H: | N: |
| gefunden: | C: | H: | N: |

Fluoreszenzquantenausbeute (absolut): $\eta = 0{,}88$ (DMF).
UV (DMF) (nm) (log$\varepsilon$): 522 (4,38), 487 (4,22), 456 (3,83).
Fluoreszenz (DMF): 573, 536.
Massenspektrum: m/e 654 ($M^+$), Intensität: 59; 639 ($-CH_3$), Intensität: 100.

## Beispiel 7

»PERDITER«

X =

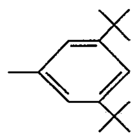

N,N′-Di-(3′.5′-di-tert.-butyl-phenyl)-perylen-3.4.9.10-tetra-carbonsäurediimid

Darstellung:
Die Darstellung erfolgt auf analoge Weise wie in den vorherigen Beispielen und den in der Beschreibung aufgeführten Literaturstellen.

Rohausbeute: 84%; Reinheit (IR, DC): >85%.

Reinigung:
Filtration einer Lösung des Farbstoffs über neutralem $Al_2O_3$ mit Toluol/Aceton (9 : 1).

Farbe des Reinprodukts: rot bis rotbraun.
Schmelzpunkt: >300° C.
IR (KBr) ($cm^{-1}$): Imid 1705, 1665; $CH_3$ 2960, 2900, 2860.
DC ($CHCl_3$, $SiO_2$): $R_f$: 0,32.

Analyse: $C_{52}H_{50}N_2O_4$

| | | | |
|---|---|---|---|
| berechnet: | C: | H: | N: |
| gefunden: | C: | H: | N: |

Fluoreszenzquantenausbeute (absolut): $\eta = 0{,}96$ (DMF).
UV (DMF) (nm) (log$\varepsilon$): 524 (4,88), 488 (4,68), 458 (4,25).
Fluoreszenz (DMF) (nm): 575, 537.
Massenspektrum: m/e.

Beispiel 8

»PERHEXAFLURAN«

X = 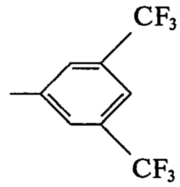

N,N'-Di-(3'.5'-bis-(trifluormethyl)-phenyl)-perylen-3.4.9.10-tetra-carbonsäurediimid

Darstellung:
Die Darstellung erfolgt auf analoge Weise wie in den vorherigen Beispielen und den in der Beschreibung aufgeführten Literaturstellen.

Rohausbeute: Reinheit (IR, DC): >65%.

Reinigung:
Filtration einer Lösung des Farbstoffs über neutralem $Al_2O_3$ mit DMF.

Farbe des Reinprodukts: hellrot.
Schmelzpunkt: 457° C (Zers.).
IR (KBr) ($cm^{-1}$): Imid 1708, 1671.
DC ($CHCl_3$, $SiO_2$): $R_f$: 0,37.

Analyse: $C_{40}H_{14}F_{12}N_2O_4$

| | | | |
|---|---|---|---|
| berechnet: | C: | H: | N: |
| gefunden: | C: | H: | N: |

Fluoreszenzquantenausbeute (absolut): $\eta = 0{,}96$ (DMF).
UV (DMF) (nm) (logε): 526 (4,85), 490 (4,66), 459 (4,26).
Fluoreszenz (DMF) (nm): 575, 537.
Massenspektrum: m/e.

Beispiel 9

»PERAN«

X = 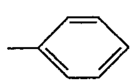

N,N'-Di-phenyl-perylen-3.4.9.10-tetra-carbonsäurediimid

Darstellung: vgl. Chemical Abstracts CA.
Rohausbeute: 98%; Reinheit (IR, DC): >95%.

Reinigung:
Filtration einer Lösung des Farbstoffs über neutralem $Al_2O_3$ mit DMF.

Farbe des Reinprodukts: dunkelrot.
Schmelzpunkt: >500° C.
IR (KBr) ($cm^{-1}$): Imid 1700, 1665.
DC ($CHCl_3$, $Al_2O_3$ neutral): $R_f$: 0,67.

Analyse: $C_{36}H_{18}N_2O_4$

| | | | |
|---|---|---|---|
| berechnet: | C: 79,70 | H: 3,34 | N: 5,16 |
| gefunden: | C: 77,76 | H: 3,39 | N: 5,49 |

Fluoreszenzquantenausbeute (absolut): $\eta = 0{,}93$ (DMF).
UV (DMF) (nm) (logε): 523 (4,79), 488 (4,60), 458 (4,19).
Fluoreszenz (DMF) (nm): 572, 536.
Massenspektrum: m/e 542 ($M^+$), Intensität: 100.

Beispiel 10

»PERSULAN«

X = 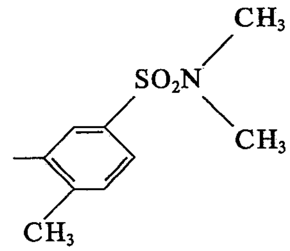

N,N′-Di-(2′-methyl-5′-N″,N″-dimethylsulfonamido-phenyl)-perylen-3.4.9.10-tetracarbonsäurediimid

Darstellung: vgl. DE-OS 2 147 024.
Rohausbeute: 70%; Reinheit (IR, DC): >80%.

Reinigung:
Filtration einer Lösung des Farbstoffs über neutralem $Al_2O_3$ mit Toluol/Aceton (9 : 1).

Farbe des Reinprodukts: karminrot.
Schmelzpunkt: 351° C (Zers.).
IR (KBr) ($cm^{-1}$): Imid 1705, 1670; $SO_2$ 1345, 1170.
DC ($CHCl_3$, $Al_2O_3$ neutral): $R_f$: 0,67.

Analyse: $C_{42}H_{32}N_4O_8S_2$

| | | | | |
|---|---|---|---|---|
| berechnet: | C: 64,27 | H: 4,11 | N: 7,14 | S: 8,17 |
| gefunden: | C: 64,15 | H: 4,31 | N: 7,18 | S: 7,96 |

Fluoreszenzquantenausbeute (absolut): $\eta = 0,97$ (DMF).
UV (DMF) (nm) (log$\varepsilon$): 526 (4,88), 489 (4,67), 458 (4,25).
Fluoreszenz (DMF) (nm): 576, 539.
Massenspektrum: m/e 784 ($M^+$).

Beispiel 11

»PEROMEFLURAN«

X = 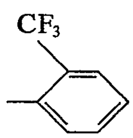

N,N′-Di-(2′-trifluormethyl-phenyl)-perylen-3.4.9.10-tetra-carbonsäurediimid

Darstellung:
Die Darstellung erfolgt auf analoge Weise wie in den vorherigen Beispielen und den in der Beschreibung aufgeführten Literaturstellen.

Rohausbeute: 88%; Reinheit (IR, DC): >90%.

Reinigung:
Filtration einer Lösung des Farbstoffs über neutralem $Al_2O_3$ mit Toluol/Aceton (9 : 1).

Farbe des Reinprodukts: dunkelweinrot.
Schmelzpunkt: 442° C (Zers.).
IR (KBr) ($cm^{-1}$): Imid 1710, 1675.
DC ($CHCl_3$, $Al_2O_3$ neutral): $R_f$: 0,69.

Analyse: $C_{38}H_{16}F_6N_2O_4$
berechnet: C: H: N:
gefunden: C: H: N:

Fluoreszenzquantenausbeute (absolut): $\eta = 0{,}97$ (DMF).
UV (DMF) (nm) (logε): 523 (4,85), 488 (4,66), 457 (4,23).
Fluoreszenz (DMF) (nm): 574, 537.
Massenspektrum: m/e 678 ($M^+$), Intensität: 100; 609 ($-CF_3$), Intensität: 52.

## Beispiel 12

»PERMETAFLURAN«

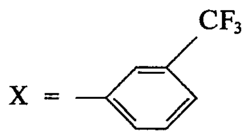

N,N'-Di-(3'-trifluormethyl-phenyl)-perylen-3.4.9.10-tetra-carbonsäurediimid

Darstellung: vgl. Japan. Kokai 7 637 918.
Rohausbeute: 83%; Reinheit (IR, DC): >95%.

Reinigung:
Filtration einer Lösung des Farbstoffs über neutralem $Al_2O_3$ mit DMF.

Farbe des Reinprodukts: karminrot.
Schmelzpunkt: 372° C (Zers.).
IR (KBr) ($cm^{-1}$): Imid 1705, 1670.
DC ($CHCl_3$, $Al_2O_3$ neutral): $R_f$: 0,67.

Analyse: $C_{38}H_{16}F_6N_2O_4$
berechnet: C: H: N:
gefunden: C: H: N:

Fluoreszenzquantenausbeute (absolut): $\eta = 0{,}99$ (DMF).
UV (DMF) (nm) (logε): 523, (4,82), 488 (4,63), 457 (4,21).
Fluoreszenz (DMF) (nm): 573, 537.
Massenspektrum: m/e 678 ($M^+$), Intensität: 100.

## Beispiel 13

»PERBUTAN«

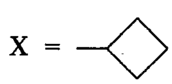

N,N'-Di-(cyclobutyl)-perylen-3.4.9.10-tetra-carbonsäurediimid

Darstellung:
Die Darstellung erfolgt auf analoge Weise wie in den vorherigen Beispielen und den in der Beschreibung aufgeführten Literaturstellen (aber zuerst Ih bei 80° C).

Rohausbeute: 98%; Reinheit (IR, DC): >50%.

Reinigung:
Filtration einer Lösung des Farbstoffs über neutralem $Al_2O_3$ mit Toluol/Aceton (9 : 1).

Farbe des Reinprodukts: weinrot.
Schmelzpunkt: >300° C.

IR (KBr) ($cm^{-1}$): Imid 1692, 1655; $CH_2$ 2950, 2860.
DC ($CHCl_3$, $SiO_2$): $R_f$: 0,33.

Analyse: $C_{32}H_{22}N_2O_4$

| | | | |
|---|---|---|---|
| berechnet: | C: | H: | N: |
| gefunden: | C: | H: | N: |

Fluoreszenzquantenausbeute (absolut): $\eta = 0{,}99$ (DMF).
UV (DMF) (nm) (log$\varepsilon$): 523, (4,78), 487 (4,58), 457 (4,16).
Fluoreszenz (DMF) (nm): 574, 535.
Massenspektrum: m/e.

Beispiel 14

»PERCYPAN«

X = 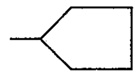

N,N'-Di-(cyclopentyl)-perylen-3.4.9.10-tetracarbonsäurediimid

Darstellung:
Die Darstellung erfolgt auf analoge Weise wie in den vorherigen Beispielen und den in der Beschreibung aufgeführten Literaturstellen.

Rohausbeute: 89%; Reinheit (IR, DC): >95%.

Reinigung:
Filtration einer Lösung des Farbstoffs über neutralem $Al_2O_3$ mit Toluol/Aceton (9 : 1).

Farbe des Reinprodukts: weinrot.
Schmelzpunkt: 385° C.
IR (KBr) ($cm^{-1}$): Imid 1690, 1650; $CH_2$ 2950, 2860.
DC ($CHCl_3$, $SiO_2$): $R_f$: 0,36.

Analyse: $C_{34}H_{26}N_2O_4$

| | | | |
|---|---|---|---|
| berechnet: | C: | H: | N: |
| gefunden: | C: | H: | N: |

Fluoreszenzquantenausbeute (absolut): $\eta = 1{,}00$ (DMF).
UV (DMF) (nm) (log$\varepsilon$): 525 (4,89), 489 (4,68), 459 (4,24).
Fluoreszenz (DMF): 576, 537.
Massenspektrum: m/e.

Beispiel 15

»PERMECYPAN«

X = 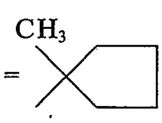

N,N'-Di-(1'-methyl-cyclopentyl)-perylen-3.4.9.10-tetra-carbonsäurediimid

Darstellung: vgl. DE-OS 2 139 690.
Rohausbeute: 68%; Reinheit (IR, DC): >80%.

Reinigung:
Filtration einer Lösung des Farbstoffs über neutralem $Al_2O_3$ mit Toluol/Aceton (9 : 1).

Farbe des Reinprodukts: weinrot.
Schmelzpunkt: 412° C.
IR (KBr) ($cm^{-1}$): Imid 1692, 1655; $CH_2$ 2930, 2850.
DC ($CHCl_3$, $Al_2O_3$ neutral): $R_f$: 0,7.
Analyse: $C_{36}H_{30}N_2O_4$

| | | | |
|---|---|---|---|
| berechnet: | C: | H: | N: |
| gefunden: | C: | H: | N: |

Fluoreszenzquantenausbeute (absolut): $\eta = 1{,}00$ (DMF).
UV (DMF) (nm) (log$\varepsilon$): 522 (4,63), 486 (4,46), 456 (4,04).
Fluoreszenz (DMF) (nm): 573, 537.
Massenspektrum: m/e.

## Beispiel 16

»PERHEXAN«

X = 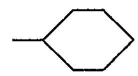

N,N'-Di-(cyclohexyl)-perylen-3.4.9.10-tetracarbonsäurediimid

Darstellung:
Die Darstellung erfolgt auf analoge Weise wie in den vorherigen Beispielen und den in der Beschreibung aufgeführten Literaturstellen.

Rohausbeute: 98%; Reinheit (IR, DC): > 90%.

Reinigung:
Filtration einer Lösung des Farbstoffs über neutralem $Al_2O_3$ mit Toluol/Aceton (9 : 1).

Farbe des Reinprodukts: dunkelweinrot.
Schmelzpunkt: 407° C.
IR (KBr) ($cm^{-1}$): Imid 1695, 1655; $CH_2$ 2930, 2860.
DC ($CHCl_3$, $SiO_2$): $R_f$: 0,39.

Analyse: $C_{36}H_{30}N_2O_4$

| | | | |
|---|---|---|---|
| berechnet: | C: | H: | N: |
| gefunden: | C: | H: | N: |

Fluoreszenzquantenausbeute (absolut): $\eta = 1{,}00$ (DMF).
UV (DMF) (nm) (log$\varepsilon$): 525 (4,86), 489 (4,66), 459 (4,26).
Fluoreszenz (DMF) (nm): 575, 536.
Massenspektrum: m/e.

## Beispiel 17

»PERCYCLOL«

X = 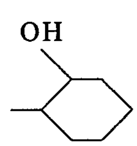

N,N'Di-(2'-hydroxy-cyclohexyl)-perylen-3.4.9.10-tetra-carbonsäurediimid

Darstellung:
Die Darstellung erfolgt auf analoge Weise wie in den vorherigen Beispielen und den in der Beschreibung aufgeführten Literaturstellen.

Rohausbeute: 89%; Reinheit (IR, DC): > 85%.

Reinigung:
Filtration einer Lösung des Farbstoffs über neutralem $Al_2O_3$ mit DMF.

Farbe des Reinprodukts: dunkelweinrot.
Schmelzpunkt: 417° C (Zers.).
IR (KBr) ($cm^{-1}$): Imid 1695, 1650; $CH_2$ 2940, 2860.
DC ($CHCl_3$, $Al_2O_3$, $Al_2O_3$ neutral): $R_f$: 0,68.
Analyse: $C_{36}H_{30}N_2O_6$

| | | | |
|---|---|---|---|
| berechnet: | C: | H: | N: |
| gefunden: | C: | H: | N: |

Fluoreszenzquantenausbeute (absolut): $\eta = 0,99$ (DMF).
UV (DMF) (nm) (log$\varepsilon$): 523 (4,83), 487 (4,63), 457 (4,21).
Fluoreszenz (DMF) (nm): 572, 536.
Massenspektrum: m/e 586 ($M^+$).

## Beispiel 18

»PERHEPTAN«

X = 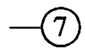

N,N'-Di-(cycloheptyl)-perylen-3.4.9.10-tetracarbonsäurediimid

Darstellung:
Die Darstellung erfolgt auf analoge Weise wie in den vorherigen Beispielen und den in der Beschreibung aufgeführten Literaturstellen.

Rohausbeute: 94%; Reinheit (IR, DC): 90%.

Reinigung:
Filtration einer Lösung des Farbstoffs über neutralem $Al_2O_3$ mit Toluol/Aceton (9 : 1).

Farbe des Reinprodukts: weinrot.
Schmelzpunkt: 382° C.
IR (KBr) ($cm^{-1}$): Imid 1690, 1650; $CH_2$ 2920, 2850.
DC ($CHCl_3$, $SiO_2$): $R_f$: 0,34.

Analyse: $C_{38}H_{34}N_2O_4$

| | | | |
|---|---|---|---|
| berechnet: | C: | H: | N: |
| gefunden: | C: | H: | N: |

Fluoreszenzquantenausbeute (absolut): $\eta = 0,98$ (DMF).
UV (DMF) (nm) (log$\varepsilon$): 524 (4,61, 488 (4,45), 459 (4,07).
Fluoreszenz (DMF) (nm): 574, 536.
Massenspektrum: m/e.

## Beispiel 19

»PERDOCAN«

X = 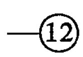

N,N'-Di-(cyclododecyl)-perylen-3.4.9.10-tetracarbonsäurediimid

Darstellung:
Die Darstellung erfolgt auf analoge Weise wie in den vorherigen Beispielen und den in der Beschreibung aufgeführten Literaturstellen.

Rohausbeute: 98%; Reinheit (IR, DC): >90%.

Reinigung:
Filtration einer Lösung des Farbstoffs über neutralem $Al_2O_3$ mit Toluol/Aceton (9 : 1).

Farbe des Reinprodukts: weinrot.
Schmelzpunkt: 363° C.
IR (KBr) ($cm^{-1}$): Imid 1692, 1655; $CH_2$ 2930, 2860.
DC ($CHCl_3$, $SiO_2$): $R_f$: 0,36.

Analyse: $C_{48}H_{54}N_2O_4$

| | | | |
|---|---|---|---|
| berechnet: | C: | H: | N: |
| gefunden: | C: | H: | N: |

Fluoreszenzquantenausbeute (absolut): $\eta = 0,99$ (DMF).
UV (DMF) (nm) (log$\varepsilon$): 526 (4,84), 490 (4,67), 460 (4,30).
Fluoreszenz (DMF) (nm): 575, 537.
Massenspektrum: m/e.

## Beispiel 20

»PERNIMEAN«

X =

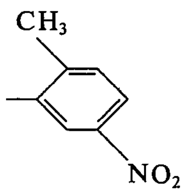

N,N'-Di-(2'-methyl-5'-nitro-phenyl)-perylen-3.4.9.10-tetracarbonsäurediimid

Darstellung:
Die Darstellung erfolgt auf analoge Weise wie in den vorherigen Beispielen und den in der Beschreibung aufgeführten Literaturstellen.

Rohausbeute: 98%; Reinheit (IR, DC): >80%.

Reinigung:
Filtration einer Lösung des Farbstoffs über neutralem $Al_2O_3$ mit DMF.

Farbe des Reinprodukts: dunkelrot.
Schmelzpunkt: >300° C.
IR (KBr) ($cm^{-1}$): Imid 1700, 1665; $NO_2$ 1520, 1350.
DC ($CHCl_3$, $Al_2O_3$ neutral): $R_f$: 0,70.

Analyse: $C_{38}H_{20}N_4O_8$

| | | | |
|---|---|---|---|
| berechnet: | C: | H: | N: |
| gefunden: | C: | H: | N: |

Fluoreszenzquantenausbeute (absolut): $\eta = 0,89$ (DMF).
UV (DMF) (nm) (log$\varepsilon$): 525 (4,69, 489 (4,51), 458 (4,11).
Fluoreszenz (DMF) (nm): 578, 540.
Massenspektrum: m/e.

Beispiel 21

»PERNIME«

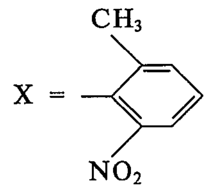

N,N'-Di-(2'-methyl-6'-nitro-phenyl)-perylen-3.4.9.10-tetracarbonsäurediimid

Darstellung:
Die Darstellung erfolgt auf analoge Weise wie in den vorherigen Beispielen und den in der Beschreibung aufgeführten Literaturstellen.

Rohausbeute: 85%; Reinheit (IR, DC): >85%.

Reinigung:
Filtration einer Lösung des Farbstoffs über neutralem $Al_2O_3$ mit Toluol/Aceton (9 : 1).

Farbe des Reinprodukts: schwarzbraun.
Schmelzpunkt: >300° C.
IR (KBr) ($cm^{-1}$): Imid 1705, 1670; $NO_2$ 1530, 1350.
DC ($CHCl_3$, $Al_2O_3$ neutral): $R_f$: 0,52.

Analyse: $C_{38}H_{20}N_4O_8$

| | | | |
|---|---|---|---|
| berechnet: | C: | H: | N: |
| gefunden: | C: | H: | N: |

Fluoreszenzquantenausbeute (absolut): $\eta = 0{,}71$ (DMF).
UV (DMF) (nm) (log): 570 (4,07), 526 (4,71), 490 (4,51), 459 (4,14).
Fluoreszenz (DMF) (nm): 580, 542.
Massenspektrum: m/e.

Beispiel 22

»PERMESÄURE«

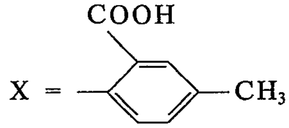

N,N'-Di-(2'-carboxy-4'-methyl)-perylen-3.4.9.10-tetracarbonsäurediimid

Darstellung:
Die Darstellung erfolgt auf analoge Weise wie in den vorherigen Beispielen und den in der Beschreibung aufgeführten Literaturstellen.

Ausbeute: 98%; Reinheit (IR, DC): >95%.
Farbe des Produkts: dunkelviolett.
Schmelzpunkt: >300° C.
IR (KBr) ($cm^{-1}$): Imid 1705, 1665; $CH_3$ 2920, 2860; COOH 3080.
DC ($CHCl_3$, $Al_2O_3$ neutral): $R_f$: 0,59.
Fluoreszenzquantenausbeute (absolut): $\eta = 0{,}81$ (DMF).
UV (DMF) (nm) (log$\varepsilon$): 523 (4,60), 488 (4,40), 457 (3,99).
Fluoreszenz (DMF) (nm): 574, 538.

Beispiel 23

»PERBENZIAN«

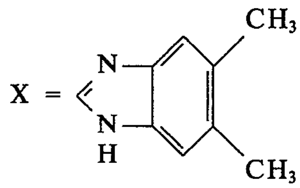

N,N'-Di-(5'.6'-dimethyl-benzimidazyl)-perylen-3.4.9.10-tetracarbonsäurediimid

Darstellung:
Die Darstellung erfolgt auf analoge Weise wie in den vorherigen Beispielen und den in der Beschreibung aufgeführten Literaturstellen.

Rohausbeute: 77%; Reinheit (IR, DC): >85%.

Reinigung:
Filtration einer Lösung des Farbstoffs über neutralem $Al_2O_3$ mit DMF.

Farbe des Reinprodukts: dunkelrot.
Schmelzpunkt: >300° C.
IR (KBr) ($cm^{-1}$): Imid 1710, 1665; $CH_3$ 2910, 2860.
DC ($CHCl_3$, $SiO_2$): $R_f$: 0,25.

Analyse: $C_{42}H_{26}N_6O_4$

| | | | |
|---|---|---|---|
| berechnet: | C: | H: | N: |
| gefunden: | C: | H: | N: |

Fluoreszenzquantenausbeute (absolut): $\eta = 0{,}01$ (DMF).
UV (DMF) (nm) (log$\varepsilon$): 526 (4,84), 490 (4,59), 459 (4,15).
Fluoreszenz (DMF) (nm): 547.
Massenspektrum: m/e.

Beispiel 24

»PERBROMAN«

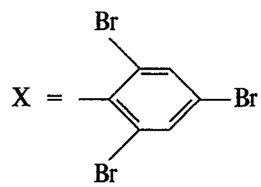

N,N'-Di-(2'.4'.6'-tribrom-phenyl)-perylen-3.4.9.10-tetracarbonsäurediimid

Darstellung:
Die Darstellung erfolgt auf analoge Weise wie in den vorherigen Beispielen und den in der Beschreibung aufgeführten Literaturstellen.

Rohausbeute: 44%; Reinheit (IR, DC): >95%.

Reinigung:
Filtration einer Lösung des Farbstoffs über neutralem $Al_2O_3$ mit Toluol/Aceton (9 : 1).

Farbe des Reinprodukts: tiefrot.
Schmelzpunkt: >300° C.
IR (KBr) ($cm^{-1}$): Imid 1710, 1675; Br 750.
DC ($CHCl_3$, $Al_2O_3$ neutral): $R_f$: 0,69.

Analyse: $C_{36}H_{12}Br_6N_2O_4$
berechnet: C: H: N:
gefunden: C: H: N:

Fluoreszenzquantenausbeute (absolut): $\eta = 0{,}92$ (DMF).
UV (DMF) (nm) (log$\varepsilon$): 527 (4,84), 491 (4,64), 460 (4,21).
Fluoreszenz (DMF) (nm): 580, 541.
Massenspektrum: m/e.

Beispiel 25

»PERFLURAN«

X = 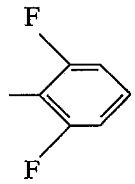

N,N'-Di-(2'.6'-difluor-phenyl)-perylen-3.4.9.10-tetracarbonsäurediimid

Darstellung:
Die Darstellung erfolgt auf analoge Weise wie in den vorherigen Beispielen und den in der Beschreibung aufgeführten Literaturstellen.

Rohausbeute: 97%; Reinheit (IR, DC): >90%.

Reinigung:
Filtration einer Lösung des Farbstoffs über neutralem $Al_2O_3$ mit DMF.

Farbe des Reinprodukts: bordeauxrot.
Schmelzpunkt: >300° C.
IR (KBr) ($cm^{-1}$): Imid 1710, 1675.
DC ($CHCl_3$, $Al_2O_3$ neutral): $R_f$: 0,58.

Analyse: $C_{36}H_{14}F_4N_2O_4$
berechnet: C: H: N:
gefunden: C: H: N:

Fluoreszenzquantenausbeute (absolut): $\eta = 0{,}95$ (DMF).
UV (DMF) (nm) (log$\varepsilon$): 525 (4,83), 489 (4,63), 458 (4,20).
Fluoreszenz (DMF) (nm): 576, 540.
Massenspektrum: m/e.

Beispiel 26

»PERMETHOXAN«

X = 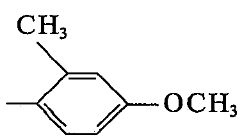

N,N'-Di-(2'-methyl-4'-methoxy-phenyl)-perylen-3.4.9.10.-tetracarbonsäurediimid

Darstellung:
Die Darstellung erfolgt auf analoge Weise wie in den vorherigen Beispielen und den in der Beschreibung aufgeführten Literaturstellen.

Rohausbeute: 95%; Reinheit (IR, DC): >85%.

Reinigung:
Filtration einer Lösung des Farbstoffs über neutralem $Al_2O_3$ mit Toluol/Aceton (9 : 1).

Farbe des Reinprodukts: dunkelweinrot.
Schmelzpunkt: >300° C.
IR (KBr) ($cm^{-1}$): Imid 1700, 1665; $CH_3$ 2960, 2910, 2840; $OCH_3$ 1235.
DC ($CHCl_3$, $Al_2O_3$ neutral): $R_f$: 0,77.

Analyse: $C_{40}H_{26}N_2O_6$

| | | | |
|---|---|---|---|
| berechnet: | C: | H: | N: |
| gefunden: | C: | H: | N: |

Fluoreszenzquantenausbeute (absolut): $\eta = 0{,}03$ (DMF).
UV (DMF) (nm) (log$\varepsilon$): 524 (4,91), 488 (4,71), 457 (4,28).
Fluoreszenz (DMF) (nm) 574, 545.
Massenspektrum: m/e.

Beispiel 27

»PERSULPYR«

X = 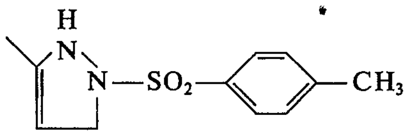

N,N'-Di-(1-(p-toluolsulfonyl)-3'-pyrazolyl)-perylen-3.4.9.10-tetracarbonsäurediimid

Darstellung:
Die Darstellung erfolgt auf analoge Weise wie in den vorherigen Beispielen und den in der Beschreibung aufgeführten Literaturstellen (aber 52 Std. bei 150° C erhitzen).

Rohausbeute: 67%; Reinheit (IR, DC): >80%.

Reinigung:
Filtration einer Lösung des Farbstoffs über neutralem $Al_2O_3$ mit DMF.

Farbe des Reinprodukts: dunkelweinrot.
Schmelzpunkt: >300° C.
IR (KBr) ($cm^{-1}$): Imid 1705, 1665; $CH_3$ 2920, 2860; NH 3400; $SO_2$ 1345.
DC ($CHCl_3$, $SiO_2$): $R_f$: 0,29.

Analyse: $C_{44}H_{30}N_6O_8S_2$

| | | | |
|---|---|---|---|
| berechnet: | C: | H: | N: |
| gefunden: | C: | H: | N: |

Fluoreszenzquantenausbeute (absolut): $\eta = 0{,}56$ (DMF).
UV (DMF) (nm) (log$\varepsilon$): 522 (4,69), 487 (4,51), 457 (4,09).
Fluoreszenz (DMF) (nm): 574, 539.
Massenspektrum: m/e.

Beispiel 28

»PERNIPYRAZAN«

X = 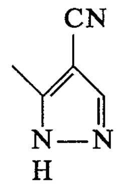

N,N'-Di-(4'-cyano-pyrazyl-5')-perylen-3.4.9.10-tetracarbonsäurediimid

Darstellung:
Die Darstellung erfolgt auf analoge Weise wie in den vorherigen Beispielen und den in der Beschreibung aufgeführten Literaturstellen.

Rohausbeute: 98%; Reinheit (IR, DC): >90%.

Reinigung:
Entfernung überschüssiger Perylentetracarbonsäure durch Auskochen mit 2%iger Sodalösung.

Farbe des Reinprodukts: tiefweinrot.
Schmelzpunkt: > 300° C.
IR (KBr) ($cm^{-1}$): Imid 1705, 1670; CN 2220; NH 3400.
DC ($CHCl_3$, $SiO_2$): 0,27.
Fluoreszenzquantenausbeute (absolut): $\eta = 0{,}31$ (DMF).
UV (DMF) (nm) (log$\varepsilon$): 525 (3,73), 489 (3,53), 457 (3,20).
Fluoreszenz (DMF) (nm): 577, 539.

Beispiel 29

»PERMEDITER«

X = 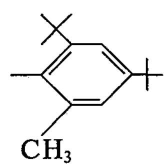

N,N'-Di-(2'.4'-di-tert.butyl-6'-methyl-phenyl)-perylen-3.4.9.10-tetracarbonsäurediimid

Darstellung:
Die Darstellung erfolgt auf analoge Weise wie in den vorherigen Beispielen und den in der Beschreibung aufgeführten Literaturstellen.

Rohausbeute: 40%; Reinheit (IR): 10%.

Reinigung:
Filtration einer Lösung des Farbstoffs über neutralem $Al_2O_3$ mit Toluol/Aceton (9 : 1)
anschließende Säulenchromatographie an Kieselgel mit Chloroform
Umkristallisation aus Toluol.

Farbe des Reinprodukts: hellorange.
Schmelzpunkt: >300° C.
IR (KBr) ($cm^{-1}$): Imid 1702, 1665; $CH_3$ 2960, 2910, 2870.
Massenspektrum: m/e 794 ($M^+$) I. 20; 779 ($-CH_3$) I. 5; 737 (-tert.Butyl) I. 100.

**Patentansprüche**

1. Verwendung von Perylenderivaten der folgenden allgemeinen Formel I

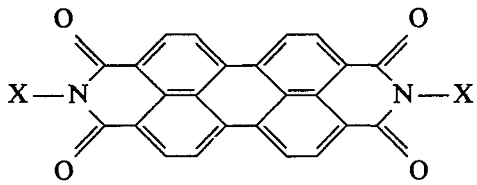

(I)

worin X einen Substituenten der allgemeinen Formel II

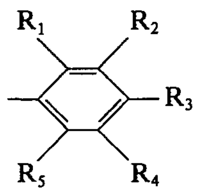

(II)

wobei in der obigen Formel II $R_1$, $R_2$, $R_3$, $R_4$ und $R_5$ gleich oder unterschiedlich sein können und Wasserstoff oder eine geradkettige oder verzweigte Alkylgruppe mit 1 bis 6 Kohlenstoffatomen, eine Trifluormethylgruppe, eine Nitrogruppe, eine Hydroxygruppe, eine Carboxylgruppe, eine Alkoxygruppe mit 1 bis 4 Kohlenstoffatomen, eine Dimethylsulfonamidogruppe oder ein Halogenatom bedeuten und wobei mindestens zwei der Substituenten $R_1$, $R_2$, $R_3$, $R_4$ und $R_5$ ein Wasserstoffatom bedeuten, mit Ausnahme der Verbindungen, worin

1) $R_1$, $R_3$ und $R_5$ Methyl und $R_2$ und $R_4$ Wasserstoff bedeuten oder
2) $R_1$ Trifluormethyl, $R_3$ Methoxy, $R_2$, $R_4$ und $R_5$ Wasserstoff bedeuten; oder

worin X eine Cycloalkylgruppe mit 4 bis 14 Kohlenstoffatomen oder eine Gruppe der allgemeinen Formel III

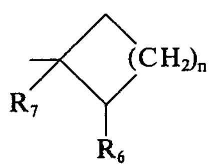

(III)

worin $R_6$ für Wasserstoff oder Hydroxyl, $R_7$ für Wasserstoff oder Methyl und n für 0 oder 9 stehen; oder
worin X
einen Rest der folgenden Formeln IV, V, VI, VII, VIII oder IX

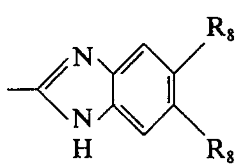

(IV)

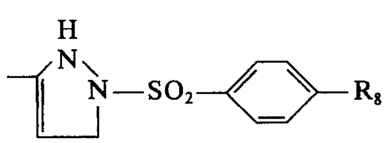

(V)

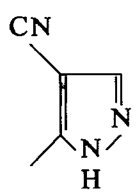

(VI)

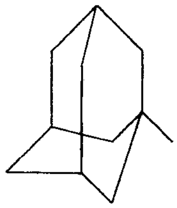

(VII)

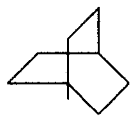

(VIII)

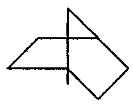

(IX)

worin $R_8$ für Wasserstoff oder $C_1-C_4$-Alkyl steht, oder
worin X einen 1-, 2- oder 9-Anthracylrest oder einen 9-Acridylrest bedeutet,
als Fluoreszenzfarbstoff für die Energie-Umwandlung oder Energiekonzentration mit Fluoreszenzkollektoren.

2. Verwendung der Perylenderivate der allgemeinen Formel I nach Anspruch 1 in Lichtsammelsystemen.

3. Verwendung nach Anspruch 1 oder 2, dadurch gekennzeichnet, daß einer der Substituenten $R_1$, $R_2$ oder $R_3$ eine tert.-Butylgruppe bedeutet und die anderen Substituenten $R_1$, $R_2$, $R_3$, $R_4$ oder $R_5$ Wasserstoffatome bedeuten.

4. Verwendung nach einem der Ansprüche 1, 2 oder 3, dadurch gekennzeichnet, daß mindestens zwei oder drei der Substituenten $R_1$, $R_2$, $R_3$, $R_4$ oder $R_5$ eine tert.-Butylgruppe bedeuten und die anderen Substituenten Wasserstoffatome bedeuten.

5. Verwendung nach Anspruch 1 oder 2, dadurch gekennzeichnet, daß man N,N'-Di-(2-tert.-butyl)-perylen-3.4.9.10-tetracarbonsäurediimid einsetzt.

6. Perylenderivate der folgenden allgemeinen Formel I'

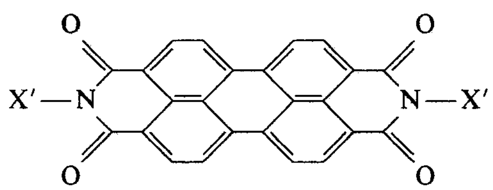

(I')

worin X' einen Substituenten der allgemeinen Formel II'

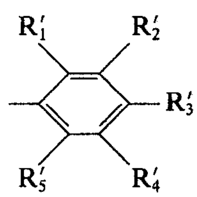

(II')

wobei in der obigen Formel II' $R'_1$, $R'_2$, $R'_3$, $R'_4$ und $R'_5$ gleich oder unterschiedlich sein können und Wasserstoff oder eine geradkettige oder verzweigte Alkylgruppe mit 1 bis 6 Kohlenstoffatomen, eine tert.-Alkylgruppe mit 4 bis 20 Kohlenstoffatomen, eine Trifluormethylgruppe, eine Nitrogruppe, eine Hydroxygruppe, eine Carboxylgruppe, eine Alkoxygruppe mit 1 bis 4 Kohlenstoffatomen, eine Dimethylsulfonamidgruppe oder ein Halogenatom bedeuten und wobei

a) mindestens zwei der Substituenten $R'_1$, $R'_2$, $R'_3$, $R'_4$ und $R'_5$ ein Wasserstoffatom bedeuten und
b) mindestens einer und maximal drei der Substituenten $R'_1$, $R'_2$, $R'_3$, $R'_4$ oder $R'_5$ eine tert.-Alkylgruppe mit 4 bis 20 Kohlenstoffatomen bedeuten,

oder worin X' einen Rest der folgenden Formeln IV, V, VI, VII, VIII oder IX

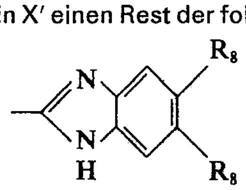

(IV)

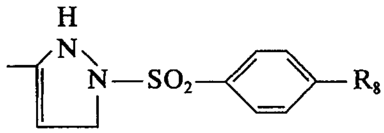

(V)

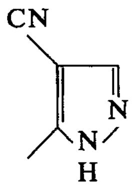

(VI)

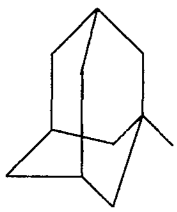

(VII)

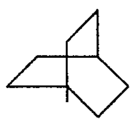

(VIII)

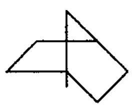

(IX)

worin $R_8$ für Wasserstoff oder $C_1-C_4$-Alkyl steht, einen 1-, 2- oder 9-Anthracylrest oder einen 9-Acridylrest bedeutet.

**Claims**

1. The use of perylene derivatives corresponding to the following general formula

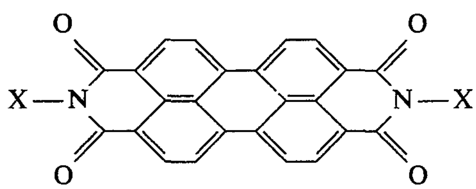

(I)

in which X represents a substituent corresponding to the following general formula

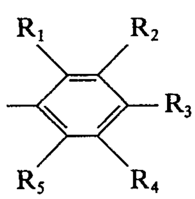

(II)

wherein $R_1$, $R_2$, $R_3$, $R_4$ and $R_5$ may be the same or different and represent hydrogen or a straight-chain or branched $C_1-C_6$-alkyl group, a trifluoromethyl group, a nitro group, a hydroxy group, a carboxyl group, a $C_1-C_4$-alkoxy group, a dimethyl sulfonamido group or a halogen atom, at least two of the substituents $R_1$, $R_2$, $R_3$, $R_4$ and $R_5$ representing a hydrogen atom, with the exception of compounds in which

1) $R_1$, $R_3$ and $R_5$ represent methyl and $R_2$ and $R_4$ represent hydrogen or
2) $R_1$ represents trifluoromethyl, $R_3$ represents methoxy and $R_2$, $R_4$ and $R_5$ represent hydrogen; or

in which X represents a $C_4-C_{14}$-cycloalkyl group or a group corresponding to the following general formula

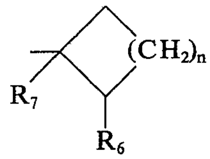

(III)

wherein $R_6$ represents hydrogen or hydroxyl, $R_7$ represents hydrogen or methyl and $n = 0$ to 9; or in which X represents a radical corresponding to the following formulae

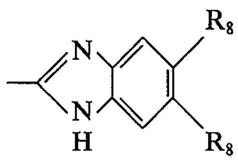

(IV)

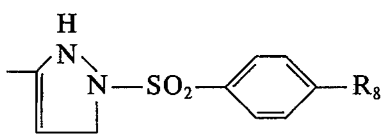

(V)

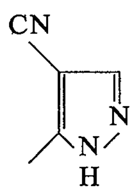

(VI)

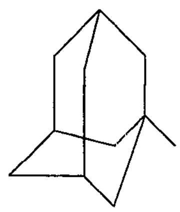

(VII)

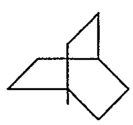

(VIII)

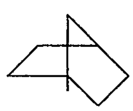

(IX)

wherein $R_8$ represents hydrogen or $C_1-C_4$-alkyl, or
in which X represents a 1-, 2- or 9-anthracyl radical or a 9-acridyl radical,
as fluorescence dyes for energy conversion or energy concentration using fluorescence collectors.

2. The use of the perylene derivatives corresponding to general formula I in Claim 1 in light collecting systems.

3. The use claimed in Claim 1 or 2, characterized in that one of the substituents $R_1$, $R_2$ or $R_3$ is a tert.-butyl group and the other substituents $R_1$, $R_2$, $R_3$, $R_4$ or $R_5$ represent hydrogen atoms.

4. The use claimed in Claim 1, 2 or 3, characterized in that at least two or three of the substituents $R_1$, $R_2$, $R_3$, $R_4$ or $R_5$ represent a tert.-butyl group and the other substituents represent hydrogen atoms.

5. The use claimed in Claim 1 or 2, characterized in that N,N'-di-(2-tert.-butyl)-perylene-3.4.9.10-tetracarboxylic acid diimide is used.

6. Perylene derivatives corresponding to the following general formula

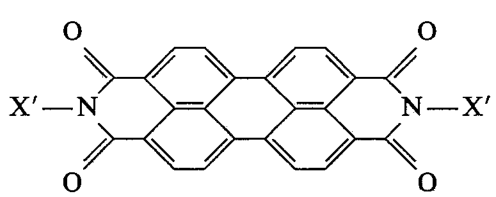

(I')

in which X′ represents a substituent corresponding to the following general formula

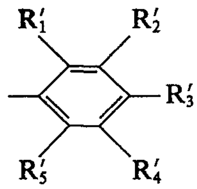

(II′)

wherein $R'_1$, $R'_2$, $R'_3$, $R'_4$ and $R'_5$ may be the same or different and represent hydrogen or a straight-chain or branched $C_1-C_6$-alkyl group, a $C_4-C_{20}$-tert.-alkyl group, a trifluoromethyl group, a carboxyl group, a $C_1-C_4$-alkoxy group, a dimethyl sulfonamide group or a halogen atom and wherein

a) at least two of the substituents $R'_1$, $R'_2$, $R'_3$, $R'_4$ and $R'_5$ represent hydrogen and
b) at least one and at most three of the substituents $R'_1$, $R'_2$, $R'_3$, $R'_4$ or $R'_5$ is a $C_4-C_{20}$-tert.-alkyl group,

or wherein X′ represents a radical corresponding to the following formulae

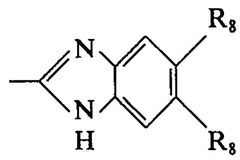

(IV)

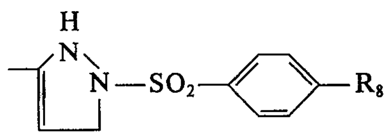

(V)

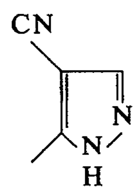

(VI)

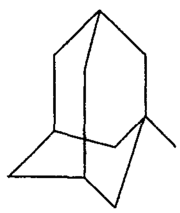

(VII)

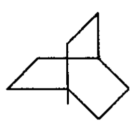

(VIII)

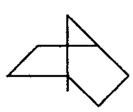

(IX)

wherein $R_8$ represents hydrogen or $C_1-C_4$-alkyl, a 1-, 2- or 9-anthracyl radical or a 9-acridyl radical.

**Revendications**

1. Utilisation, comme colorants fluorescents pour la conversion d'énergie ou la concentration d'énergie au moyen de collecteurs de fluorescence, de dérivés de pérylène de la formule générale I suivante:

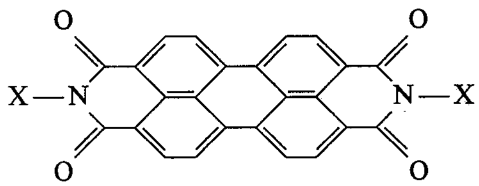

(I)

dans laquelle X représente un substituant de formule générale II:

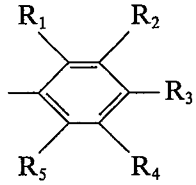

(II)

dans laquelle:
$R_1$, $R_2$, $R_3$, $R_4$ et $R_5$ peuvent être identiques ou différents et représentent l'hydrogène ou un groupe alkyle à chaîne droite ou ramifiée de 1 à 6 atomes de carbone, un groupe trifluorométhyle, un groupe nitro, un groupe hydroxyle, un groupe carboxyle, un groupe alcoxyle de 1 à 4 atomes de carbone, un groupe diméthylsulfonamide ou un atome d'halogène et au moins deux des substituants $R_1$, $R_2$, $R_3$, $R_4$ et $R_5$ représentent un atome d'hydrogène, à l'exception des composés dans lesquels:

1) $R_1$, $R_3$ et $R_5$ représentent un groupe méthyle et $R_2$ et $R_4$ un atome d'hydrogène, ou
2) $R_1$ représente un groupe trifluorométhyle, $R_3$ un groupe méthoxyle, $R_2$, $R_4$ et $R_5$ des atomes d'hydrogène; ou

dans laquelle X représente un groupe cycloalkyle de 4 à 14 atomes de carbone ou un groupe de formule générale III:

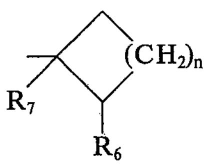

(III)

dans laquelle $R_6$ représente l'hydrogène ou un groupe hydroxyle, $R_7$ l'hydrogène ou un groupe méthyle et n est compris entre 0 à 9; ou
dans laquelle X représente un radical de l'une des formules IV, V, VI, VII, VIII, IX suivantes:

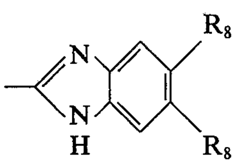

(IV)

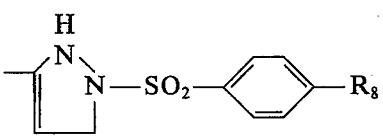

(V)

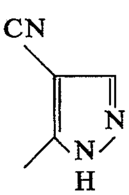

(VI)

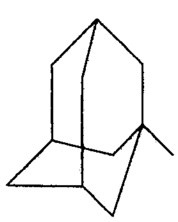

(VII)

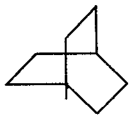

(VIII)

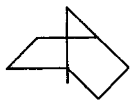

(IX)

dans lesquelles $R_8$ représente l'hydrogène ou un groupe alkyle en $C_1$ à $C_4$, ou dans laquelle X représente un radical 1-, 2- ou 9-anthracyle ou un radical 9-acridyle.

2. Utilisation des dérivés de pérylène de la formule générale I selon la Revendication 1, dans des systèmes collecteurs de lumière.

3. Utilisation selon l'une des Revendications 1 et 2, caractérisée par le fait que l'un des substituants $R_1$, $R_2$ ou $R_3$ représente un groupe butyle tertiaire et que les autres des substituants $R_1$, $R_2$, $R_3$, $R_4$ ou $R_5$ représentent des atomes d'hydrogène.

4. Utilisation selon l'une des Revendications 1, 2 et 3, caractérisée par le fait qu'au moins deux ou trois des substituants $R_1$, $R_2$, $R_3$, $R_4$ et $R_5$ représentent un groupe butyle tertiaire et que les autres substituants représentent des atomes d'hydrogène.

5. Utilisation selon l'une des Revendications 1 et 2, caractérisée par le fait que l'on utilise le diimide de l'acide N,N'-bis-(2-tertiobutyl)-pérylène-3,4,9,10-tétracarboxylique.

6. Dérivés de pérylène de formule générale I' suivante:

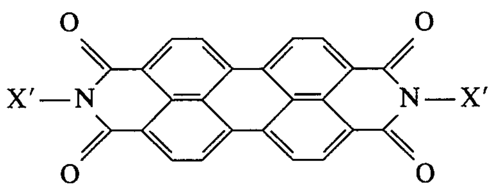

(I')

dans laquelle X' représente un substituant de la formule générale II':

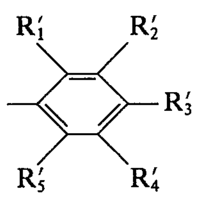

(II')

$R'_1$, $R'_2$, $R'_3$, $R'_4$ et $R'_5$ pouvant être identiques ou différents et représentent l'hydrogène ou un groupe alkyle à chaîne droite ou ramifiée de 1 à 6 atomes de carbone, un groupe alkyle tertiaire de 4 à 20 atomes de carbone, un groupe trifluorométhyle, un groupe nitro, un groupe hydroxyle, un groupe carboxyle, un groupe alcoxyle de 1 à 4 atomes de carbone, un groupe diméthylsulfonamide ou un atome d'halogène, et

a) au moins deux des substituants $R'_1$, $R'_2$, $R'_3$, $R'_4$ et $R'_5$ représentant un atome de carbone et
b) au minimum un et au maximum trois des substituants $R'_1$, $R'_2$, $R'_3$, $R'_4$ et $R'_5$ représentant un groupe alkyle tertiaire de 4 à 20 atomes de carbone,

ou dans laquelle X' représente un radical de l'une des formules IV, V, VI, VII, VIII ou IX suivantes:

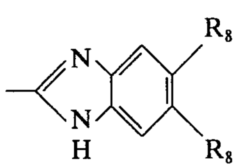

(IV)

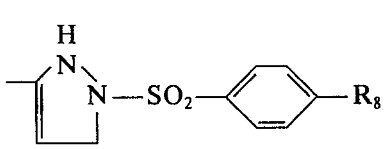

(V)

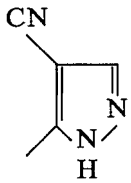

(VI)

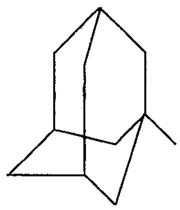

(VII)

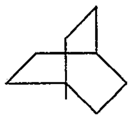

(VIII)

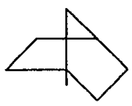

(IX)

dans lesquelles $R_8$ représente l'hydrogène ou un groupe alkyle en $C_1$ à $C_4$, un radical 1-, 2- ou 9-anthracycle ou un radical 9-acridyle.